(19) Europäisches Patentamt
European Patent Office
Office européen des brevets

(11) Veröffentlichungsnummer : **0 097 121**
**B1**

(12) # EUROPÄISCHE PATENTSCHRIFT

(45) Veröffentlichungstag der Patentschrift : **30.12.86**

(51) Int. Cl.$^4$ : **C 09 B 67/24**, D 06 P 1/647

(21) Anmeldenummer : **83810247.3**

(22) Anmeldetag : **08.06.83**

(54) **Kaltwasserlösliches Farbstoffpräparat.**

(30) Priorität : **14.06.82 CH 3670/82**

(43) Veröffentlichungstag der Anmeldung : **28.12.83 Patentblatt 83/52**

(45) Bekanntmachung des Hinweises auf die Patenterteilung : **30.12.86 Patentblatt 86/52**

(84) Benannte Vertragsstaaten : **AT BE CH DE FR GB IT LI NL**

(56) Entgegenhaltungen :
**EP-A- 0 057 158**
**FR-A- 2 095 903**
**FR-A- 2 096 429**
**US-A- 2 955 011**
**US-A- 4 014 646**

(73) Patentinhaber : **CIBA-GEIGY AG**
**Klybeckstrasse 141**
**CH-4002 Basel (CH)**

(72) Erfinder : **Mäusezahl, Dieter, Dr.**
**Langgartenstrasse 19**
**CH-4105 Biel-Benken (CH)**

**EP 0 097 121 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft ein kaltwasserlösliches Farbstoffpräparat, ein Verfahren zu dessen Herstellung und dessen Verwendung zum Färben oder Bedrucken von Textilmaterial.

Der Farbstoff der Formel I

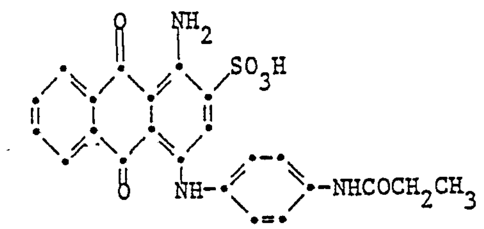

(I)

ist aus der DE-C-945 643 bekannt und Färben mit konzentrierten Lösungen dieses Farbstoffs in FR-A-2 096 429 beschrieben. Auf Polyamid und Wolle werden mit diesem Farbstoff intensiv blaue Färbungen erhalten. Der Farbstoff löst sich gut in warmem Wasser. Beim Eintragen in kaltes Wasser neigt das Farbstoffpulver jedoch zur Klumpenbildung und ist nur beschränkt löslich, bei Raumtemperatur lassen sich z. B. weniger als 5 g/l rückstandsfrei lösen.

Der vorliegenden Erfindung lag die Aufgabe zugrunde, die Kaltwasserlöslichkeit des genannten Farbstoffs wesentlich zu verbessern und soweit zu steigern, dass in Wasser von 20 °C eine Löslichkeit von ca. 30 g/l erreicht wird.

Diese Aufgabe wird dadurch gelöst, dass man ein Präparat verwendet, bestehend aus dem Farbstoff der Formel I, einem anionischen Dispergiermittel und einer Alkylendiamindi-, tri- oder tetracarbonsäure.

Die vorliegende Erfindung betrifft somit ein kaltwasserlösliches Farbstoffpräparat enthaltend

a) 30-90 Gew.% Farbstoff der Formel I,
b) 20-50 Gew.% eines anionischen Dispergiermittels,
c) 0,1-10 Gew.% einer Alkylendiamindi-, tri- oder tetracarbonsäure der Formel II

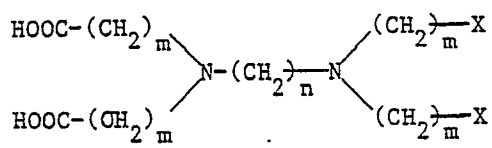

(II)

worin X ein Carboxylrest oder die Nitrilogruppe bedeutet, m 1 bis 3 und n 2 bis 5 ist oder deren Salze ; und gegebenenfalls weitere Zusätze.

Bei den anionischen Dispergiermitteln handelt es sich um die üblichen Dispergiermittel für wasserlösliche Farbstoffe, insbesondere um Formaldehydkondensationsprodukte aromatischer Sulfonsäuren oder um Ligninsulfonate. Als Formaldehydkondensate sind genannt Kondensationsprodukte aus Formaldehyd und Naphthalinsulfonsäuren oder aus Formaldehyd, Naphthalinsulfonsäure und Benzolsulfonsäure, oder ein Kondensationsprodukt aus Rohkresol, Formaldehyd und Naphthalinsulfonsäure, sowie Kondensate aus Phenol-, Kresol- oder Naphtholsulfonsäure und Formaldehyd. Als anionische Dispergiermittel kommen ferner mittel- bis hochmolekulare Polyphosphate in Frage.

Als Alkylendiamindicarbonsäure der Formel II ist z. B. die Aethylendiamin-N-dicyanomethylendiessigsäure genannt.

Als Alkylendiamintricarbonsäure der Formel II kommt z. B. die Aethylendiamin-N-cyanomethylentriessigsäure oder die Propylendiamin-N-cyanomethylen-triessigsäure in Frage.

Als Alkylendiamintetracarbonsäure ist neben der Propylendiamintetraessigsäure und der Propylendiamintetrapropionsäure insbesondere die Aethylendiamintetraessigsäure geeignet.

Die Alkylendiamindi-, tri- oder tetracarbonsäuren werden als solche oder in Form ihrer Salze eingesetzt. Bevorzugt sind die Alkalimetallsalze.

Als weitere Zusätze kann das erfindungsgemässe Präparat z. B. noch Coupagemittel, wie Dextrin, Harnstoff oder anorganische Salze, etwa Natriumchlorid oder Natriumsulfat, sowie Netzmittel, wie Nonylphenoldiglykoläthersulfat oder Dodecylbenzolsulfonat, oder auch Antischaummittel, Entstäubungsmittel und/oder Bindemittel enthalten.

Ein besonders gut kaltwasserlösliches Farbstoffpräparat weist die folgende Zusammensetzung auf :

a) 60-80 Gew.% Farbstoff der Formel I
b) 5-15 Gew.% Ligninsulfonat
c) 0,5-3 Gew.% Alkalisalz der Aethylendiamintetraessigsäure.

Erhalten wird das erfindungsgemässe Präparat z. B. durch Vermischen des Farbstoffes der Formel I, mit einem anionischen Dispergiermittel, einer Alkylendiamindi-, tri- oder tetracarbonsäure der Formel II oder deren Alkalisalz und gegebenenfalls weiteren Zusätzen, wobei die Carbonsäure der Formel II bereits in die wässrige Lösung des Rohfarbstoffs und zwar nach Abtrennen des Kupferhydroxides und/oder zum isolierten Farbstoff gegeben wird. Die einzelnen Komponenten können in fester Form, — der Farbstoff z. B. als Presskuchen — oder als wässrige Anschlämmung bzw. Lösung eingesetzt werden. Bei einer wässrigen Anschlämmung kann man die einzelnen Komponenten anstelle eines einfachen Vermischens auch miteinander nass vermahlen. Getrocknet wird die homogene Suspension gegebenenfalls nach Aufkonzentrierung, vorteilhaft mittels Sprühtrocknung ; die Aufkonzentrierung erfolgt beispielsweise mit Hilfe der Hyperfiltration. Weitere Zusätze, wie Coupagemittel oder Entstäubungsmittel können vor dem Sprühtrocknen oder auch erst danach zugegeben werden.

Durch den Zusatz der Hilfsmittelkombination aus anionischem Dispergiermittel und Alkylendiamindi-, tri- oder tetracarbonsäure wird neben der Kaltwasserlöslichkeit auch die Löslichkeit des Farbstoffs in heissem Wasser erheblich gesteigert. So erhält man beispielsweise in 90 °C heissem Wasser Löslichkeiten von über 150 g Präparat pro Liter. Zudem sind derartige Lösungen, wenn sie längere Zeit bei erhöhter Temperatur gehalten werden, völlig stabil. Hingegen ergibt der Rohfarbstoff weniger konzentrierte Lösungen, die in der Wärme nicht stabil sind, und aus denen der Farbstoff mit der Zeit teilweise auskristallisiert.

Verwendung findet das erfindungsgemässe Farbstoffpräparat zur Herstellung von Färbebädern, Klotzflotten oder Druckpasten. Diese eignen sich zum Färben oder Bedrucken vor allem von Textilmaterial z. B. solchem aus natürlichem und insbesondere synthetischem Polyamid.

Die folgenden Beispiele dienen zur Erläuterung der Erfindung ;

Teile bedeuten Gewichtsteile und Prozente Gewichtsprozente.

## Beispiel 1

Herstellung des Farbstoffs der Formel I

Der Farbstoff der Formel I wird hergestellt durch Kondensation von 1-Amino-4-brom-anthrachinon-2-sulfonsäure mit p-Aminopropionanilid in wässriger Lösung. Durch Zusatz von Kochsalz wird der Farbstoff aus der Syntheselösung ausgefällt und anschliessend bei 80 °C getrocknet. Der Farbstoff hat eine Löslichkeit in Wasser, wie nachfolgend definiert, von ca. 30 g/l und eine Kaltwasserlöslichkeit von weniger als 5 g/l.

Die Wasserlöslichkeit wird wie folgt ermittelt :

2 g, 3 g, 4 g und 5 g des Farbstoffs werden jeweils in 100 ml destilliertes Wasser eingetragen und für die Dauer von 10 min. auf 90 °C erwärmt. Man erhält klare Lösungen, die heiss filtriert werden, wobei auf dem Papierfilter keine Farbstoffreste zurückbleiben.

Nach dem Abkühlen lässt man die Lösungen 24 Std. bei 20 bis 25 °C stehen und filtriert erneut durch einen Papierfilter. Dabei zeigen die Lösungen mit einer Konzentration von 40 und 50 g/l deutliche Filterrückstände. Die Lösungen, die den Farbstoff in Konzentrationen von 20 bzw. 30 g/l enthalten, lassen sich rückstandsfrei filtrieren.

Die Kaltwasserlöslichkeit wird wie folgt ermittelt :

Eine bestimmte Menge des Farbstoffs wird in 200 ml entsalzes Wasser von 20 °C unter Rühren eingetragen und anschliessend noch 2 min. gerührt (Magnetrührer 750 U/min. ; 400 ml Becherglas). Dann wird die Farbstofflösung durch ein Papierfilter filtriert (SS 1450 CV ; Ø 7 cm) und mit 50 ml entsalztem Wasser nachgespült. Als Kaltwasserlöslichkeit wird die Grenzkonzentration der Farbstofflösung angegeben, die sich rückstandsfrei filtrieren lässt.

## Beispiel 2

100 g des Rohfarbstoffs der Formel I

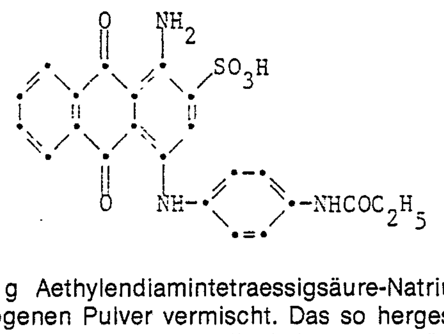

werden im Labormixer mit 2 g Aethylendiamintetraessigsäure-Natriumsalz und 8 g Ligninsulfonat während 5 min. zu einem homogenen Pulver vermischt. Das so hergestellte Farbstoffpräparat hat eine Wasserlöslichkeit von 70 g/l und eine Kaltwasserlöslichkeit von 30 g/l.

Beispiel 3

15 Teile des gemäss Beispiel 2 erhaltenen Farbstoffpräparats werden in 500 Teilenkaltem Wasser gelöst. Diese Lösung wird hierauf zu einer Lösung, enthaltend 3 Teile eines Verdickungsmittels auf der Basis von Johannisbrotkernmehl, 5,0 Teile eines koazervatbildenden Klotzhilfsmittels auf Basis eines Kondensationsproduktes einer höher molekularen Fettsäure mit einem Oxyalkylamin, 2,0 Teile krist. Mononatriumphosphat und 1,0 Teile krist. Dinatriumphosphat in 450 Teilen kaltem Wasser zugegeben. Anschliessend wird mit Wasser auf 1 000 Teile aufgefüllt. Von dieser Flotte werden 300 %, bezogen auf das Teppichgewicht, auf einen Nylon-Nadelflor-Rohteppich aufgetragen, bei einer Teppichgeschwindigkeit von 8 Meter pro Minute. Der getränkte Teppich gelangt in einen Schleifendämpfer, wo er während 10 Minuten mit Sattdampf von 98 bis 100° behandelt wird.

Nach dem Waschen in einer Breitwaschmaschine erhält man einen gleichmässig blau gefärbten Teppich.

Ohne den Zusatz der Hilfsmittelkombination ist die Kaltwasserlöslichkeit des Farbstoffs geringer als 5 g/l. Der Rohfarbstoff als solcher ist daher für diesen Verwendungszweck ungeeignet.

Beispiel 4

160 Teile des gemäss Beispiel 2 erhaltenen Farbstoffpräparats werden in 1 000 Teilen Wasser bei 90 °C gelöst. Eine Probe der Lösung ist rückstandsfrei filtrierbar. Die Lösung wird, unter schwachem Rühren während 17 Stunden auf einer Temperatur von 90 °C gehalten. Entnimmt man dieser Lösung nach 17 Stunden erneut eine Probe und filtriert, so hinterlässt auch diese keinen Rückstand auf dem Filterpapier.

Wird anstelle des Farbstoffpräparats der Rohfarbstoff verwendet, so lassen sich von diesem bei 90 °C nur 80 g in 1 000 Teilen Wasser in Lösung bringen. Wird diese Lösung während 17 Stunden unter schwachem Rühren bei 90 °C gehalten, so kristallisiert ein Teil des Farbstoffs aus. Der Rohfarbstoff kann demzufolge in Färbereien nicht zur Herstellung von konzentrierten Vorratslösungen verwendet werden.

Beispiel 5

1-Amino-4-bromanthrachinon-2-sulfonsäure wird in Wasser bei pH 8,5 bis 9,5 mit p-Aminopropionanilid unter Cu(I)-Katalyse kondensiert. Das Kondensationsprodukt — der Farbstoff der Formel I — fällt dabei aus und wird durch Filtration von löslichen Nebenprodukten befreit. Den Filterrückstand löst man in heissem Wasser und trennt unlösliches Kupferhydroxid durch Klärfiltration ab. Anschliessend wird die Farbstofflösung durch Hyperfiltration auf ein Viertel ihres Volumens eingeengt. Die dabei entstehende Suspension wird mit 2 % Aethylendiamintetraessigsäure-Natriumsalz und 20 % Ligninsulfonat (jeweils bezogen auf theoretische Farbstoffausbeute) versetzt und durch Sprühtrocknung entwässert. Man erhält ein freifliessendes Farbstoffpulver, das durch Zumischen von Dextrin auf die handelsübliche Standardstärke eingestellt wird. Das fertige Farbstoffpräparat hat eine Kaltwasserlöslichkeit von 30 g/l.

Beispiel 6

Der durch Cu(I) katalysierte Kondensation von 1-Amino-4-bromanthrachinon-2-sulfonsäure mit p-Aminopropionanilid erhaltene Farbstoff der Formel I wird in heissem Wasser gelöst und ein Rückstand von kupferhydroxid durch Klärfiltration abgetrennt. Sodann wird die wässrige Lösung des Rohfarbstoffs mit 4 % (bezogen auf Farbstoff) an Aethylendiamintetraessigsäure-Natriumsalz versetzt und anschliessend der Farbstoff durch Zugabe von Kochsalz ausgefällt. Der Farbstoff wird abfiltriert und der feuchte Presskuchen mit einem Trockensubstanzgehalt von ca. 40 % im Schaufeltrockner getrocknet. Vor dem Mahlen wird der trockene Farbstoff noch mit 5 % Natriumpolyphosphat (Calgon T®) versetzt und abschliessend mit Dextrin auf die handelsübliche Standardstärke eingestellt. Die Kaltwasserlöslichkeit des fertigen Präparats beträgt 30 g/l.

**Patentansprüche**

1. Kaltwasserlösliches Farbstoffpräparat enthaltend
   a) 30-90 Gew.% des Farbstoffs der Formel I

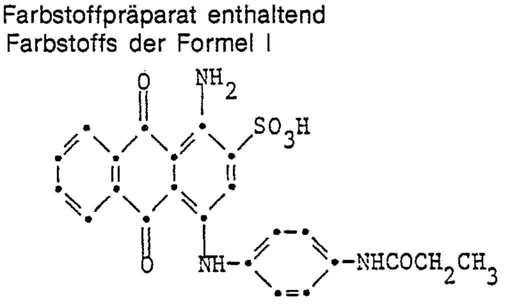

(I)

b) 2-50 Gew.% eines anionischen Dispergiermittels ;
c) 0,1-10 Gew.% einer Alkylendiamindi-, tri- oder tetracarbonsäure der Formel II

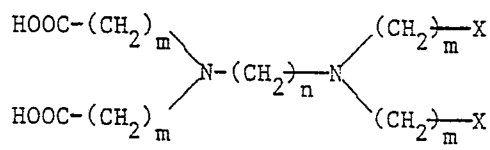

(II)

worin X ein Carboxylrest oder die Nitrilogruppe bedeutet, m 1 bis 3 und n 2 bis 5 ist oder deren Salze ; und gegebenenfalls weitere Zusätze.

2. Farbstoffpräparat gemäss Anspruch 1, dadurch gekennzeichnet, dass es als anionisches Dispergiermittel ein Ligninsulfonat, ein Naphthalinsulfonsäure-Formaldehydkondensat oder Polyphosphat enthält.

3. Farbstoffpräparat gemäss Anspruch 1, dadurch gekennzeichnet, dass es als Alkylendiamintetracarbonsäure, Aethylendiamintetraessigsäure oder deren Salze enthält.

4. Farbstoffpräparat gemäss Anspruch 1, dadurch gekennzeichnet, dass es als weitere Zusätze ein Antischaummittel, Coupagemittel, Netzmittel, Bindemittel und/oder Entstäubungsmittel enthält.

5. Farbstoffpräparat gemäss Anspruch 1 enthaltend
a) 60-80 Gew.% Farbstoff der Formel I ;
b) 5-15 Gew.% Ligninsulfonat und
c) 0,5-3 Gew.% Alkalisalz der Aethylendiamintetraessigsäure.

6. Verfahren zur Herstellung des Farbstoffpräparats gemäss Anspruch 1, dadurch gekennzeichnet, dass man den Farbstoff der Formel I mit einem anionischen Dispergiermittel, einer Alkylendiamindi-, tri- oder tetracarbonsäure der Formeln II und gegebenenfalls weiteren Zusätzen vermischt, wobei die Carbonsäure der Formel II bereits in die wässrige Lösung des Rohfarbstoffs und zwar nach Abtrennen des Kupferhydroxids und/oder zum isolierten Farbstoff gegeben wird.

7. Verfahren gemäss Anspruch 6, dadurch gekennzeichnet, dass man die einzelnen Komponenten in Form einer wässrigen Anschlämmung miteinander vermischt oder vermahlt und die wässrige Suspension anschliessend trocknet.

8. Verfahren gemäss Anspruch 7, dadurch gekennzeichnet, dass die Trocknung mittels Sprühtrocknung erfolgt.

9. Das gemäss dem Verfahren von Anspruch 6 und 7 erhaltene Farbstoffpräparat.

10. Verwendung der Präparate gemäss Anspruch 1 zum Färben und Bedrucken von Textilmaterial.

## Claims

1. A cold water soluble dyestuff composition containing
a) 30 to 90 % by weight of the dye of formula I

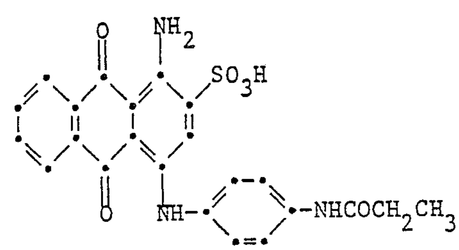

(I)

b) 2 to 50 % by weight of an anionic dispersant
c) 0.1 to 10 % by weight of an alkylenediaminedicarboxylic, -tricarboxylic or -tetracarboxylic acid of the formula II

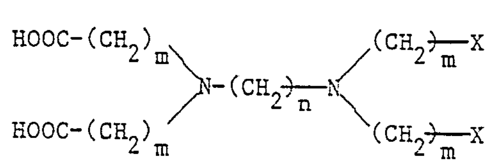

(II)

wherein X is a carboxyl group or the nitrilo group, m is 1 to 3 and n is 2 to 5, or a salt thereof, and

optionally further ingredients.

2. A dyestuff composition according to claim 1, wherein the anionic dispersant is a lignosulfonate or a naphthalenesulfonic acid/formaldehyde condensate or a polyphosphate.

3. A dyestuff composition according to claim 1, wherein the alkylenediaminetetracarboxylic acid is ethylenediaminetetraacetic acid or a salt thereof.

4. A dyestuff composition according to claim 1, which contains as further ingredients an antifoam, an extender, a wetting agent, a binder and/or a dust inhibitor.

5. A dyestuff composition according to claim 1 containing
a) 60 to 80 % by weight of the dye of formula I
b) 5 to 15 % by weight of lignosulfonate and
c) 0.5 to 3 % by weight of an alkali metal salt of ethylenediaminetetraacetic acid.

6. A process for the preparation of the dyestuff composition as claimed in claim 1, which process comprises mixing the dye of formula I with an anionic dispersant, an alkylenediaminedicarboxylic, -tricarboxylic or -tetracarboxylic acid of the formula II, and optionally further ingredients, the carboxylic acid of the formula II being added direct to the aqueous solution of the crude dye after removal of copper hydroxyde, and/or to the isolated dye.

7. A process according to claim 6, which comprises mixing or grinding the individual components in the form of an aqueous suspension with one another and subsequently drying said aqueous suspension.

8. A process according to claim 7, wherein drying is effected by spray drying.

9. The dyestuff composition obtained by the process as claimed in either of claims 6 or 7.

10. A method of dyeing or printing textile material, which comprises the use of a composition as claimed in claim 1.

## Revendications

1. Préparation colorante soluble dans l'eau froide, contenant
a) 30-90 % en poids du colorant de formule I

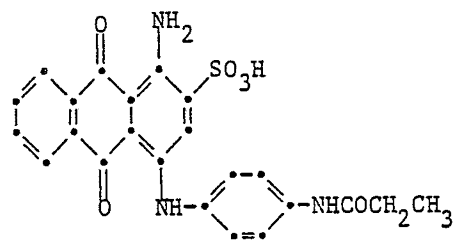

(I)

b) 2-50 % en poids d'un agent dispersant anionique ;
c) 0,1-10 % en poids d'un acide alkylènediamine-dicarboxylique, -tricarboxylique ou -tétracarboxylique, de formule II

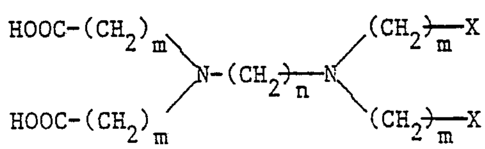

(II)

dans laquelle X représente un groupe carboxyle ou le groupe nitrile, m vaut de 1 à 3, et n vaut de 2 à 5, ou de ses sels ; et éventuellement d'autres adjuvants.

2. Préparation colorante conforme à la revendication 1, caractérisée en ce qu'elle contient, comme agent dispersant anionique, un ligninesulfonate, un produit de condensation d'un acide naphtalènesulfonique avec le formaldéhyde, ou un polyphosphate.

3. Préparation colorante conforme à la revendication 1, caractérisée en ce qu'elle contient, comme acides alkylènediaminetétracarboxyliques, de l'acide éthylènediaminetétraacétique, ou ses sels.

4. Préparation colorante conforme à la revendication 1, caractérisée en ce qu'elle contient, comme autres adjuvants, un agent antimousse, un agent de coupure, un agent mouillant, un liant, et/ou un agent de dépoussiérage.

5. Préparation colorante conforme à la revendication 1, contenant
a) 60-80 % en poids de colorant de formule I,
b) 5-15 % en poids de ligninesulfonate, et
c) 0,5-3 % en poids d'un sel alcalin de l'acide éthylènediaminetétraacétique.

6. Procédé de fabrication d'une préparation colorante conforme à la revendication 1, caractérisé en ce que l'on mélange le colorant de formule I avec un agent dispersant anionique, un acide alkylènediamine-dicarboxylique, -tricarboxylique ou -tétracarboxylique, de formule II, et éventuellement d'autres adjuvants, l'acide carboxylique de formule II étant ajouté déjà dans la solution aqueuse du colorant brut, bien sûr après séparation de l'hydroxyde de cuivre, et/ou au colorant isolé.

7. Procédé conforme à la revendication 6, caractérisé en ce que l'on mélange ou que l'on broie les uns avec les autres les composants pris isolément, de façon à les mettre sous forme d'une suspension aqueuse, et que l'on sèche ensuite la suspension aqueuse.

8. Procédé conforme à la revendication 7, caractérisé en ce que le séchage est effectué par pulvérisation.

9. Préparation colorante obtenue selon le procédé conforme aux revendications 6 et 7.

10. Utilisation de la préparation conforme à la revendication 1 pour la teinture et l'impression de matériaux textiles.